# EUROPEAN PATENT SPECIFICATION

(11) **EP 2 310 733 B1**
(45) Date of publication and mention of the grant of the patent: **30.05.2012**
(21) Application number: 09788421.7
(22) Date of filing: 24.07.2009
(51) Int. Cl.: F16L 5/02, F16L 59/12, F24J 2/46

(54) **PIPE JOINT, IN PARTICULAR IN A SOLAR COLLECTOR**
ROHRVERBINDUNG, INSBESONDERE BEI EINEM SONNENKOLLEKTOR
JOINT DE TUYAUX, NOTAMMENT DANS UN COLLECTEUR SOLAIRE

(30) Priority: 25.07.2008 PL 38575508
(43) Date of publication of application: 20.04.2011
(73) Proprietor: Fakro PP Spolka Z O.O., 33-300 Nowy Sacz (PL)
(72) Inventor: DZIURZYNSKI, Tomasz, PL-33-380 Krynica (PL); MAJOCH, Waclaw, PL-33-300 Nowy Sacz (PL)
(74) Representative: Lukaszyk, Szymon
(86) International application number: PCT/PL2009/050014
(87) International publication number: WO 2010/011151

(56) References cited:
- DE-C1- 19 908 657
- DE-U1- 20 004 502
- US-A- 6 045 163

## Description

The invention concerns a pipe joint, at the same time performing the function of passing the duct run through a wall and fastening the pipes to the wall, providing thermal insulation between the pipes and the wall. The invention can be applied mainly in solar collectors for connecting absorber terminals to external pipes, rigid or flexible, which supply and drain the absorber fluid.

Threaded pipe joints are known, which join two coaxial pipes or hoses, enabling their disconnection and providing the required leak tightness of the connection. Also pipe fastenings to the walls the pipes go through are known as separate structural nodes. For piping led out from a contained space through a wall it is necessary that structural elements enabling to catch a connector pipe to prevent its turning during fitting to a threaded member of the other pipe connected should be outside of the connector pipes led out. Regardless of joints and pipe fitting, also piping insulation systems, mainly for thermal insulation, are known.

DE 200 04 502 U1 discloses a pipe joint in solar collector, performing a function of carrying a duct run through a wall and fastening it to the side wall of the solar collector box structure, with a threaded connector pipe, which is the ending of one of the two joint pipes, connected inseparably to this pipe of the connected pipe. The threaded connector pipe has a polygonal head, seated in a socket in the mounting element shaped matching the connector pipe head. The mounting element is moveably connected with the collector wall, by means of a groove.

The essence of the solution according to the invention is that the pipe joint, in particular in a solar collector, has a threaded connector pipe, which is seated in the wall by way of a thermal insulator, and the connector pipe has a polygonal head, seated in a socket in the thermal insulator, the shape of the socket corresponding to the shape of the head.

The thermal insulator has an outer non-circular part seated in a fixing which matches its shape and is located in the duct run through the wall, whereas connection of the thermal insulator to the wall prevents its turning around the axis perpendicular to the wall. The threaded connector pipe is the ending of one of the two pipes connected, advantageously at the inner side of the wall. In a solar connector it is the ending of the absorber piping. The threaded connector pipe is inseparably connected to this piping, for instance by soldering, and the threaded part of the connector pipe goes through to the opposite side of the wall, where it is connected to a nipple fastening the other one of the pipes connected.

In the first variant of the invention, the thermal insulator along with the threaded connector pipe seated in the insulator, is connected to a wall, in particular to the side wall of the box structure of the solar collector, by way of a fastening plate adjacent to this wall and mounted slidably in relation to this wall. The thermal insulator is seated in a non-circular hole in the fastening plate, advantageously in a rectangular hole, while the insulator member placed in this hole matches the shape of the hole. Advantageously, the fastening plate is mounted in grooves profiled along the box structure wall, in particular in a section the wall is made of, for instance in a section according to patent application description PL-P-384 565.

In the second variant of the invention the thermal insulator, along with the threaded connector pipe seated in the insulator, is connected to a wall, in particular of the box structure of a solar collector, by way of a corner fastener adjacent to two adjoining walls of this box structure. The corner fastener is a rectangular oblong plate bent at a straight angle, forming two fastener arms, adjacent to the two walls of the box structure adjoining in the corner and connected to these walls, advantageously inseparably. Both arms of the corner fastener are advantageously seated in grooves profiled along both adjoining walls, for instance in the grooves of a section according to patent application description PL-P-384 565. The thermal insulator is seated in one of the corner fastener arms, in a non-circular, advantageously rectangular hole, and the insulator member located in the hole matches the shape of the hole.

In the third invention variant the thermal insulator, along with the threaded connector pipe is seated in a non-circular hole located directly in a wall, and the insulator member located in this hole matches the shape of the hole. Advantageously the hole in the wall is rectangular.

The threaded connector pipe has a polygonal head, advantageously hexagonal or square, so the socket for this head in the thermal insulator is also respectively hexagonal or square. A hexagonal head allows to save material for the connector pipe, and a square head better prevents turning of the connector pipe in the socket. The bearing surface of the connector pipe head is adjacent to the socket bottom surface in the thermal insulator. At the opposite side of this insulator, or at the outer side of the box structure wall, an elastic mounting ring is mounted on the connector pipe, fixing the position of the connector pipe relative to the thermal insulation in the axis direction. In another variant, axial fixing of the connector pipe is performed by a nipple, advantageously a low nipple seated on the threaded part of the connector pipe.

The thermal insulator has a through hole for the threaded connector pipe, and in addition there is no thread on its segment located in the through hole of the insulator. The connection of the thermal insulator to the connector pipe has a seal, advantageously in the form of rubber O-ring located in a groove on an unthreaded segment of the connector pipe. Furthermore, the thermal insulator has a flange rectangular to the axis of the hole for the connector pipe and the shape of this flange is similar to the shape of the hole the thermal insulator is mounted in. This flange is adjacent to the box structure wall, depending on the connection variant, either with a backlash or not.

In the first variant of the invention, or with the insulator mounted in the fastening plate, there is a backlash between the insulator flange and the collector wall, ensuring slidability of the fastening plate. The backlash is obtained by application of spacers, which are thicker than the wall, situated between the fastening plate and the thermal insulator flange. If the slidability is only needed during assembly, spacers are not necessary, and the backlash needed for ensuring this slidability is obtained by loosening joints of the thermal insulator flange and the fastening plate. In the second invention variant, or with the insulator mounted in the corner fastener, and in the third variant, with the insulator mounted directly in the wall, the insulator flange can adhere to the wall without a backlash.

In the thermal insulator flange, at the side of the connector pipe head socket, or on the surface of this flange at the side of the box structure wall, there is a groove located near the flange edge.

This groove is to prevent capillary suction of leakages towards the non-circular hole the thermal insulator is mounted in. If applied for an inclined solar collector, with a pipe joint according to the invention mating the collector wall located up, the groove in the flange covers with its length this part of the flange perimeter which in the collector mounted in its place of operation is located below the threaded connector pipe. In the thermal insulator mounted in a rectangular hole, the flange is also rectangular, and the groove is located near the bottom edge of this rectangle. Ends of the groove are bent and placed along adjoining sides of the rectangular flange, on a part of their length.

Thermal insulator has also venting holes, crossing through its part located in the non-circular hole in the fastening plate, the corner fastener or the box structure wall. The venting holes are situated at the opposite, in relation to the groove in the flange, side of the hole for the threaded connector pipe, or in the thermal insulator mating the wall of an inclined solar collector located up, they are situated above the connector pipe.

An advantageous effect of invention application is the compactness of the pipe joint design, resulting from multifunctionality of the thermal insulator. It is also advantageous that the threaded connector pipe is protected against unwanted turn, while external piping is being connected, which protects the solar collector absorber ended with a joint by the invention against damage. In the variant with a fastening plate mounted slidably in the side wall of the solar collector box structure, an additional advantageous result is that it enables absorber assembly errors to be compensated, and if the slidability is during operation - it also enables absorber thermal expansions in direction along this wall to be compensated.

The subject-matter of the invention is presented in the embodiment examples of the solar collector pipe joint, shown in the drawings, where the individual figures present:
Fig. 1. - the joint with a thermal insulator mounted in a slidable fastening plate, with a hexagonal head connector pipe and a mounting ring - in an axonometric view with its components taken apart.
Fig. 2 - the joint as in fig. 1 - in a cross-section by a plane perpendicular to the direction of the main wall section.
Fig. 3 - the joint having a connector pipe with a nipple - in a cross-section by a plane perpendicular to the direction of the main wall section.
Fig. 4 - the joint with a thermal insulator mounted in a corner fastener, with a square head connector pipe and a mounting ring - in an axonometric view with its components taken apart.
Fig. 5 - the joint with a thermal insulator mounted directly in a wall, with a hexagonal head connector pipe and a mounting ring - in an axonometric view with its components taken apart.

The subject-matter of the invention is also presented in the embodiment example not shown in the picture, only discussed by comparison to another drawn example.

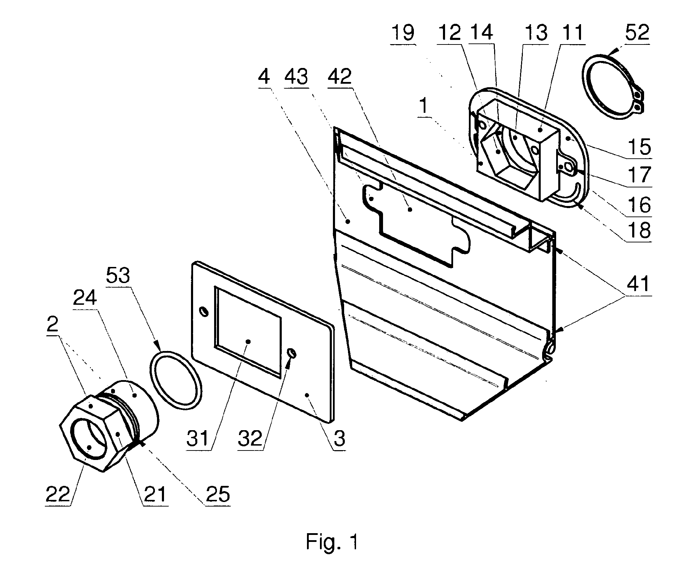

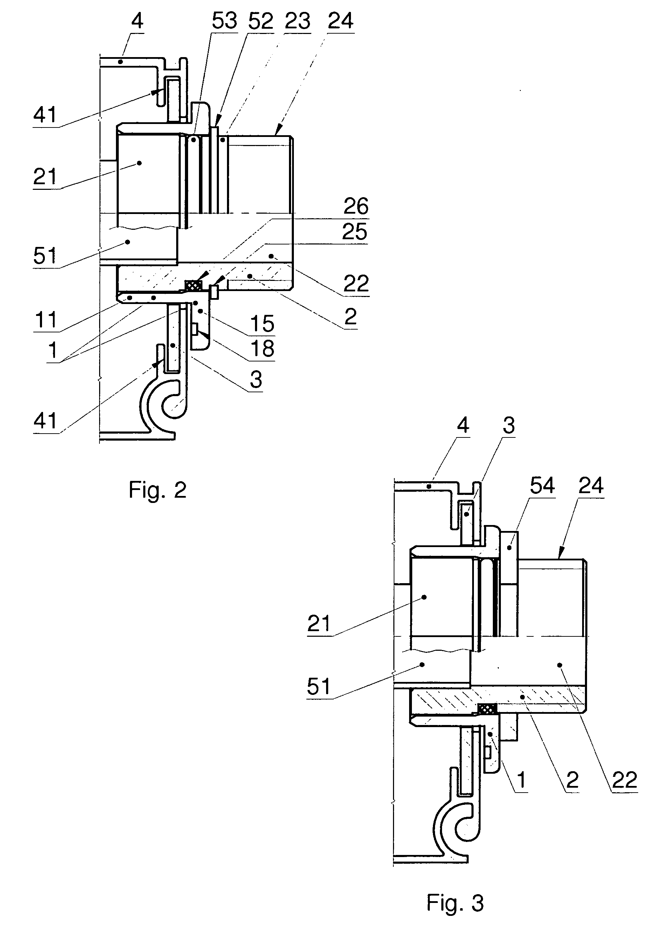

Example 1. The pipe joint according to the first embodiment example of the invention (fig. 1 and 2) comprises mainly a thermal insulator 1, made of plastic, a threaded connector pipe 2 and the fastening plate 3, adjacent to the wall 4 of the solar collector. The connector pipe 2, fastening plate 3 and wall 4 are made of metal, and the wall 4 is made of a section according to patent application description PL-P-384 565. The fastening plate 3 is rectangular and is mounted slidably in grooves 41 of the solar collector wall 4 profile. The fastening plate 3 has a through rectangular hole 31, in which the cubicoidal part 11 of the thermal insulator is seated. The cubicoidal part 11 of the thermal insulator, with a hexagonal socket 12, for the hexagonal head 21 of the threaded connector pipe is entered through the hole 42 in the wall 4 into the inside of the solar collector, and therefore also the head 21 of the connector pipe is located at the inner side of the wall 4 of this collector. Also the ending of the absorber 51 pipe conduit connected to the connector pipe 2 by soldering is entered into the through hole 22 in the connector pipe from the inner side

The thermal insulator has in its rectangular part 11 a through hole 13 for the connector pipe 2, coaxial with the hexagonal socket 12 for the connector pipe head. In the hole 13 of the thermal insulator 1 there is an unthreaded section 23 of the connector pipe 2, while its externally threaded section 24 protrudes from the wall 4 of the solar collector 5. For axial fixing of the connector pipe 2 relative to the thermal insulator 1, the bearing surface of the head 21 of the connector pipe is adjacent to the bottom 14 surface of the hexagonal socket 12, and at the opposite side of the thermal insulator the connector pipe 2 is safeguarded with an elastic mounting ring 52, placed in a rectangular groove 25 on the connector pipe perimeter. The externally threaded 24 section of the connector pipe 2 is used for connecting it to the nipple (not shown in the figure), which is the ending of an external piping connected to the connector pipe 2, and this is either a rigid pipe or a hose.

The rectangular shape of the hole 31 and of the cubicoidal part 11 of the thermal insulator seated in this hole, as well as mounting of the connector pipe head 21 in the thermal insulator socket 12 and mounting of the fastening plate 3 in the wall 4 together prevent unwanted turning of the connector pipe 2 during tightening the nipple of the external piping being connected. The hole 42 in the solar collector wall 4 is larger than the hole 31 in the fastening plate 3, in particular along the profile of the wall 4, as a result the position of the thermal insulator 1 and at the same time of the connector pipe 2, and its admissible changes are affected mainly by dimensions of the fastening plate 3 and its guiding in grooves 41 of the wall 4. The length of the hole 42 in the wall 4, longer than the width of the cubicoidal part 11 of the thermal insulator enables movement of the fastening plate 3 together with the thermal insulator 1 and the connector pipe 2. The thermal insulator has the flange 15 shaped as a rectangle with rounded corners, perpendicular to the axis of the hole 13 for the threaded connector pipe. The flange 15 is located at the outer side of the wall 4 of the solar collector box structure. On the flange 15 surface, at the cubicoidal part 11 of the thermal insulator side, there are two spacer shoulders 16 located at the cubicoidal part of the insulator, which with their butting faces adhere to the slidable fastening plate 3. Correspondingly to these shoulders, the hole 42 in the wall has two opposite recesses 43, where spacer shoulders 16 are accommodated, also when the travelling thermal insulator is in its extreme position. The thermal insulator 1 is fixed axially relative to the fastening plate 3 with two screws (not shown in the figure) crossing the through holes 17 in the spacer shoulders, which are screwed in the threaded holes 32 in the fastening plate. The height of the spacer shoulders 16 slightly exceeds the thickness of the wall 4, causing backlash between this wall and the thermal insulator flange 15, enabling free movement of the pipe joint, both during the assembly and during operation of the solar collector. It allows to compensate assembly errors, and during operation - thermal expansion of the absorber.

On the unthreaded section 23 of the connector pipe 2, placed in the hole 13 of the thermal insulator 1 there is a seal 53 in the form of a rubber O-ring. This seal, seated in the groove 26, prevents penetration of potential leakages from under the nipple of the connected external piping, along the connector pipe to the inside of the solar collector. In the rectangular flange 15 of the thermal insulator, on its surface from the wall 4, there is the groove 18, located at the bottom flange edge. The ends of the groove 18 are bent and placed along side edges of the rectangular flange, on a part of their length. The groove 18 is to protect against capillary suction towards the hole 31 in the fastening plate, leakages drifting at the external side of the thermal insulator from under the nipple of the connected external conduit. The thermal insulator 1 has also two venting holes 19 crossing through the cubicoidal part 11 of this insulator. Venting holes 19 are located at the opposite side of the hole 13 for the connector pipe to the groove 18.

Example 2. The pipe joint according to the second embodiment example of the invention (picture - fig. 3) comprises mainly a thermal insulator 1, made of plastic, a threaded connector pipe 2 and a fastening plate 3, adjacent to the wall 4 of the solar collector box structure. The hexagonal head 21 of the connector pipe is located in a socket in the part of the thermal insulator that is entered into the inside of the solar collector box structure. The ending of the absorber 51 piping connected to the connector pipe by soldering is entered into the through hole 22 in the connector pipe from this inner side.

The second embodiment example differs from the first one in that the low nipple 54 is used for axial fixing of the connector pipe 2 in the thermal insulator 1, mounted on the connector pipe section with an external thread 24 intended for securing to the nipple (not shown in the figure), which is the ending of the external piping being connected to the connector pipe. Other technical measures are identical as in the first embodiment example.

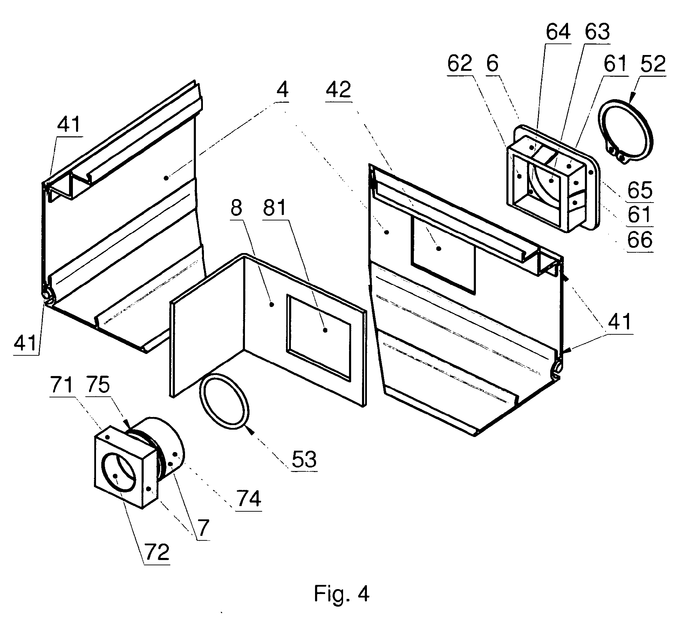

Example 3. The pipe joint according to the third embodiment example of the invention (fig. 4) comprises mainly a thermal insulator 6, made of plastic, a threaded connector pipe 7 and a corner fastener 8, adjacent to two walls 4 of the solar collector meeting in the corner. The connector pipe 7, corner fastener 8 and walls 4 are made of metal, and the walls 4 are made of a section according to patent application description PL-P-384 565. The corner fastener 8 is a rectangular oblong plate bent at an straight angle, which forms two arms of this fastener, each seated in grooves 41 of the wall 4 profiles forming the corner, the corner fastener 8 is secured to the walls inseparably.

The corner fastener 8, has a through rectangular hole 81 in one of the arms, in which the cubicoidal part 61 of the thermal insulator is seated, with a square socket 62 for the threaded connector pipe square head 71. The cubicoidal part 61 of the thermal insulator, is entered through the hole 42 in the wall 4 and the hole 81 into the corner fastener 8 to the inside of the solar collector, and therefore also the square head 71 of the connector pipe 6 is located at the inner side of the wall 4 of the solar collector box structure. The ending of the absorber piping (not shown in fig. 4) connected to the connector pipe by soldering is entered into the through hole 72 in the connector pipe 7 from this inner side

The thermal insulator 6 has in its cubicoidal part 61 a through hole 63 for the connector pipe 7, coaxial with the square socket 62 for the connector pipe head. In the hole 63 of the thermal insulator there is an unthreaded section of the connector pipe (as in the first embodiment), while its externally threaded section 74 protrudes from the wall 4 outside the solar collector. For axial fixing of the connector pipe 7 in the thermal insulator 6, the bearing surface of the square head 71 of the connector pipe is adjacent to the surface of the bottom 64 of the square socket 62 in this insulator, and at the opposite side of the thermal insulator the connector pipe 7 is safeguarded with the elastic mounting ring 52, placed in a rectangular groove 75 on the connector pipe perimeter. The externally threaded 74 section of the connector pipe 7 is used for connecting it to the nipple (not shown in the figure), which is the ending of an external piping connected to the connector pipe, and this may be either a rigid pipe or a hose.

The rectangular shape of the hole 81 and the part of the thermal insulator mounted in this hole, as well as mounting of the connector pipe head 71 in the thermal insulator socket 62 and mounting of the corner fastener 8 in the wall 4, together prevent unwanted turning of the connector pipe 7 during tightening of the nipple of the external conduit connected. Mounting the thermal insulator 6 in the corner fastener 8 prevents movement of the thermal insulator relative to the wall 4 of the box structure. The thermal insulator 6 has a flange 65 adjacent to the wall 4 outside the collector and fixed axially relative to the wall 4 and the corner fastener 8 with elastic catches 66 located on each of the flanks of the cubicoidal part 61 of the thermal insulator. These catches, after passing through the holes 42 and 81, spring back from the surface of the cubicoidal part 61 of the thermal insulator and leaning against the corner fastener 8 prevent self-acting, uncontrolled ejection of the thermal insulator outwards.

On the unthreaded section of the connector pipe 7 (near its head), placed in the through hole 63 of the thermal insulator 6 there is a seal 53 in the form of a rubber O-ring seated in the groove on the connector pipe intended for this seal. The task of this seal is identical as in the first embodiment of the invention.

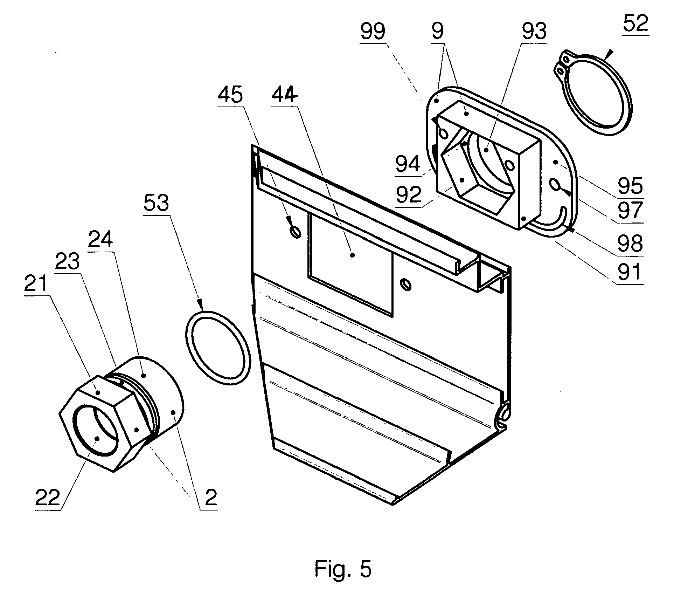

Example 4. The pipe joint according to the fourth embodiment example of the invention (fig. 5) comprises mainly a thermal insulator 9, made of plastic, secured directly to the wall 4 of the solar collector and a threaded metal connector pipe 2. The wall 4, made of a profile according to patent application description PL-P-384 565, has a through rectangular hole 42, through which the cubicoidal part 91 of the thermal insulator is entered into the inside of the box structure, with a hexagonal socket 92 for a hexagonal head 21 of the threaded connector pipe placed at the inner side of the wall 4. Also the ending of the absorber piping connected to the connector pipe 2 by soldering is entered into the through hole 22 in the connector pipe 2 from this inner side.

The thermal insulator has in its cubicoidal part 91 a through hole 93 for the connector pipe 2, coaxial with the hexagonal socket 92 for the connector pipe head. In the hole 93 of the thermal insulator 9 there is the unthreaded section 23 of the connector pipe 2, while its externally threaded section 24 protrudes from the wall 4 outside the solar collector. For axial fixing of the connector pipe 2 in the thermal insulator 9, the bearing surface of the hexagonal head 21 of the connector pipe is adjacent to the surface of the bottom 94 of the hexagonal socket 92 in this insulator, and at the opposite side of the thermal insulator the connector pipe 9 is safeguarded with an elastic mounting ring 52, identical as in the first embodiment. The externally threaded section 94 of the connector pipe 9 is used for connecting it to the nipple (not shown in the figure), which is the ending of the external piping connected to the connector pipe 2, and this piping is either a rigid tube or a hose. The mounting of the cubicoidal part 11 of the thermal insulator in the rectangular hole 42 in the wall 4, as well as mounting of the connector pipe head 21 in the thermal insulator socket 92, together prevent unwanted turning of the connector pipe 2 during tightening of the nipple of the connected external piping.

The thermal insulator 9 has the flange 95 shaped as a rectangle with rounded corners, perpendicular to the axis of the hole 93 for the connector pipe. The flange 95 is adjacent to the outside of the wall 4 of the solar collector and is fastened to the wall with two screws (not shown in the figure) crossing the through holes 97 in the flange and screwed in the threaded holes 45 in the wall 4 of the collector, which press the flange against the wall outer surface.

On the unthreaded section 23 of the connector pipe 2, placed in the through hole 93 of the thermal insulator 9, a seal 53 in the form of a rubber O-ring is seated. In the rectangular flange 95 of the thermal insulator, on its surface from the wall 4, there is the groove 98, located at the bottom and partially at the side flange edges. The location of the seal 53 and the groove 98, as well as their tasks are identical as in the first embodiment. The thermal insulator 9 has also two venting holes 99 crossing through its cubicoidal part 91 of this insulator, located at the opposite side of the hole 93 for the connector pipe to the groove 98.

Example 5. The pipe joint according to the fifth embodiment example of the invention (not shown in the figure) has a fastening plate seated slidably in grooves of the solar collector wall, and the thermal insulator, with a rectangular flange with rounded corners, goes with its cubicoidal part into the inside of the solar collector through a rectangular hole in the fastening plate - identical as in the first embodiment. The difference is that the thermal insulator (as in the fourth example) has no spacer shoulders, and the hole in the wall, longer than in the fastening plate, is rectangular without any additional recesses. As there are no spacer shoulders, screws going through the holes in the thermal insulator flange and screwed in the threaded holes in the fastening plate, press the flange against the solar collector wall, therefore the joint is unslidable and does not compensate absorber thermal expansion. However screws connecting the thermal insulator flange to the fastening plate can be loosen during assembly, obtaining slidability of the insulator, which allows absorber shape deviations to be compensated. The connector pipe, to which the ending of the absorber conduit is soldered, has a hexagonal head located in the thermal insulator socket, and at the opposite side of this insulator it has an elastic mounting ring and a threaded section the external piping is connected to.

## Claims

1. Pipe joint, in particular in a solar collector, performing a function of carrying a duct run through a wall (4) and fastening it to this wall (4), in particular to a side wall of the solar collector box structure, with a threaded connector pipe (2,7), which is the ending of one of two joint pipes, advantageously connected inseparably to this pipe, this connector pipe (2,7) passes through to the other side of the wall (4), where it is connected to a nipple fastening of the other connected pipe, **characterized in that** the threaded connector pipe (2, 7) is mounted in the wall (4) by way of a thermal insulator (1, 6, 9), the connector pipe has a polygonal head (21, 71), seated in a socket (12, 62, 92) in the thermal insulator (1) shaped matching the connector pipe head (21, 71) and the thermal insulator (1, 6, 9) has an outer non-circular part (11, 61, 91) seated in a fixing hole (31, 81, 44) which matches its shape and is located at the wall.

2. Pipe joint as claimed in claim 1, **characterized in that** the thermal insulator (1) is connected to the wall (4) by way of a fastening plate (3) adjacent to the wall, mounted slidably relative to this wall, advantageously in grooves (41) profiled along the wall and the fixing hole (31) is located in the fastening plate (3).

3. Pipe joint as claimed in claim 1, **characterized in that** the thermal insulator (6) is connected to the wall (4) by way of a corner fastener (8) adjacent to two adjoining walls (4) of the box structure, mounted advantageously in grooves (41) profiled along both the walls and the fixing hole (81) is located in the corner fastener (8).

4. Pipe joint as claimed in claim 1, **characterized in that** the fixing hole (44) is located directly in the wall (4).

5. Pipe joint as claimed in any claim 1 to 4, **characterized in that** the connector pipe (2) has a hexagonal head (21).

6. Pipe joint as claimed in any claim 1 to 5, **characterized in that** the bearing surface of the connector pipe head (21, 71) is adjacent to the surface of the bottom (14, 64, 94) of the thermal insulator socket (1, 6, 9) and an elastic mounting ring (52) is on the connector pipe (2,7) at the opposite side of this insulator.

7. Pipe joint as claimed in any claim 1 to 5, **characterized in that** the bearing surface of the connector pipe head (21, 71) is adjacent to the surface of the bottom (14, 64, 94) of the thermal insulator socket (1, 6, 9) and a nipple (54), advantageously a low one, is on the connector pipe (2,7) at the opposite side of this insulator.

8. Pipe joint as claimed in any claim 1 to 7, **characterized in that** it has through venting holes (19, 99) in the thermal insulator (1, 9).

9. Pipe joint as claimed in any claim 1 to 8, **characterized in that** in the thermal insulator (1, 6, 9), in the hole for the connector pipe (2, 7), it has a seal (53) mating the unthreaded section (23) of the connector pipe.

10. Pipe joint as claimed in claim 9, **characterized in that** the seal (53) is placed in a groove on the unthreaded section (23, 63) of the connector pipe.

11. Pipe joint as claimed in claim 9 or 10, **characterized in that** the thermal insulator (1, 9) has a flange (15, 95), perpendicular to the axis of the hole (13, 93) for the connector pipe (2) and it has a groove (18, 98) located near the flange edge in the flange, at the side of the socket (12, 92) for the connector pipe head.

## Patentansprüche

1. Rohrverbindung, insbesondere bei einem Sonnenkollektor, die zur Durchführung der Leitungsstränge durch die Wand (4) und deren Befestigung an dieser Wand (4) dient, insbesondere an der Seitenwand einer kastenförmigen Konstruktion des Sonnenkollektors, die mit einem Gewindestutzen versehen ist, der den Anschluss einer von zwei zu verbindenden Rohrleitungen darstellt und mit dieser Leitung vorzugsweise untrennbar verbunden ist, wobei dieser Stutzen (2, 7) auf die andere Seite der Wand (4) durchgeht, wo er mit einer Befestigungsmutter, die zur Befestigung der zweiten zu verbindenden Rohrleitung dient, verbunden ist, **dadurch gekennzeichnet, dass** der Gewindestutzen (2, 7) in die Wand (4) durch die Vermittlung eines Wärmeisolators (1, 6, 9) eingesetzt ist, einen Mehrkantkopf (21, 71) aufweist und in dem Wärmeisolator in einen der Form dieses Kopfes (21, 71) angepassten Sitz (12, 62, 92) eingesetzt ist, und dieser Wärmeisolator (1, 6, 9), der mit einem äußeren nicht kreisförmigen Teil (11, 61, 91) versehen ist, welcher in die Aufnahmeöffnung (31, 81, 42), deren Form der Form dieses Teils entspricht, eingesetzt ist, an der Wand angebracht ist.

2. Rohrverbindung nach Anspruch 1, **dadurch gekennzeichnet, dass** der Wärmeisolator (1) mit der Wand (4) mittels einer Befestigungsplatte (3), die an die Wand anliegt und entlang dieser Wand vorzugsweise in die in der Wand profilierten Rillen (41) verschiebbar gesetzt ist, und in der Befestigungsplatte (3) eine Aufnahmeöffnung (31) angebracht ist.

3. Rohrverbindung nach Anspruch 1, **dadurch gekennzeichnet, dass** der Wärmeisolator (1) mit der Wand (4) mittels eines kantigen Verbindungsstücks (8) verbunden ist, das an zwei angrenzende Wände (4) der kastenförmigen Konstruktion anliegt und vorzugsweise in den entlang dieser beiden Wände profilierten Rillen (41) eingesetzt ist, und in dem kantigen Verbindungsstück (8) eine Aufnahmeöffnung (81) angebracht ist.

4. Rohrverbindung nach Anspruch 1, **dadurch gekennzeichnet, dass** die Aufnahmeöffnung (42) unmittelbar in der Wand (4) vorhanden ist.

5. Rohrverbindung nach einem der Ansprüche 1 bis 4, **dadurch gekennzeichnet, dass** der Gewindestutzen (2) einen Sechskantkopf (21) aufweist.

6. Rohrverbindung nach einem der Ansprüche 1 bis 5, **dadurch gekennzeichnet, dass** die Kopfstützfläche (21, 71) des Gewindestutzens an die Sitzbodenfläche (14, 64, 94) im Wärmeisolator (1, 6, 9) anliegt, und an der gegenüberliegenden Seite dieses Isolators an dem Stutzen (2, 7) ein Sicherungsring (52) angebracht ist.

7. Rohrverbindung nach einem der Ansprüche 1 bis 5, **dadurch gekennzeichnet, dass** die Kopfstützfläche (21, 71) des Gewindestutzens an die Sitzbodenfläche (14, 64, 94) im Wärmeisolator (1, 6, 9) anliegt, und an der gegenüberliegenden Seite dieses Isolators an dem Stutzen (2, 7) eine vorzugsweise flache Mutter (54) angebracht ist.

8. Rohrverbindung nach einem der Ansprüche 1 bis 7, **dadurch gekennzeichnet, dass** der Wärmeisolator (1, 9) mit Durchgangsbohrungen (19, 99) zur Entlüftung versehen ist.

9. Rohrverbindung nach einem der Ansprüche 1 bis 8, **dadurch gekennzeichnet, dass** in dem Wärmeisolator (1, 6, 9) in der für den Stutzen (2, 7) vorgesehenen Öffnung eine Dichtung (53), die mit dem gewindelosen Abschnitt (23) des Stutzens zusammenwirkt, angebracht ist.

10. Rohrverbindung nach Anspruch 9, **dadurch gekennzeichnet, dass** die Dichtung (53) in eine Rille auf dem gewindelosen Abschnitt (23, 63) des Stutzens eingesetzt ist.

11. Rohrverbindung nach Anspruch 9 oder 10, **dadurch gekennzeichnet, dass** der Wärmeisolator (1, 9) einen Flansch (15, 95) hat, der senkrecht zur Achse der für den Stutzen (2) vorgesehen Öffnung (13, 93) positioniert ist, und dieser Flansch von der Seite des für den Stutzenkopf vorgesehenen Sitzes (12, 92) mit einer am Flaschenrand angeordneten Nut (18, 98) versehen ist.

## Revendications

1. Joint de tuyaux notamment dans un collecteur solaire, qui a pour fonction de conduire un faisceau de câbles à travers la paroi (4) et de les fixer à cette paroi (4), notamment à la paroi latérale du boîtier du collecteur solaire, muni d'un raccord fileté (2, 7), qui forme l'extrémité de l'un des deux joints de tuyaux à raccorder, avantageusement relié à ce conduit indissociablement, lequel raccord (2,7) passe à l'autre côté de la paroi (4), où il est lié à l'écrou de serrage du deuxième des joints de tuyaux à raccorder **caractérisé en ce que** le raccord fileté (2, 7) est monté dans la paroi (4) au moyen de l'isolant thermique (1, 6, 9), le raccord a une tête polygonale (21, 71), monté dans la mortaise (12, 62, 92) dont la forme correspond à la forme de cette tête (21, 71), ladite mortaise (12, 62, 92) se trouvant dans l'isolant thermique, et l'isolant thermique (1, 6, 9) possède une partie externe non circulaire (11, 61, 91) montée dans l'orifice de retenue (31, 81, 42) correspondant à sa forme et est situé dans la paroi.

2. Joint de tuyaux selon la revendication 1, **caractérisé en ce que**, l'isolant thermique (1) est relié à la paroi (4) au moyen de la plaque de fixation (3) ajustée à la paroi et monté de manière coulissante par rapport à cette paroi, avantageusement dans des rainures (41) profilées le long de la paroi et dans la plaque de fixation (3) est situé l'orifice de retenue (31).

3. Joint de tuyaux selon la revendication 1, **caractérisé en ce que** l'isolant thermique (6) est relié à la paroi (4) au moyen d'un raccord d'angle (8) adjacent aux deux parois voisines (4) du boîtier et monté avantageusement dans les rainures (41) profilées le long de ces deux parois et dans le raccord d'angle (8) est situé l'orifice de retenue (81).

4. Joint de tuyaux selon la revendication 1, **caractérisé en ce que** l'orifice de retenue (42) est situé directement dans la paroi (4).

5. Joint de tuyaux selon l'une quelconque des revendications de 1 à 4, **caractérisé en ce que** le raccord (2) a une tête hexagonale (21).

6. Joint de tuyaux selon l'une quelconque des revendications de 1 à 5, **caractérisé en ce que** la surface de butée de la tête (21, 71) du raccord adhère à la surface du fond (14, 64, 94) de la mortaise dans l'isolant thermique (1, 6, 9), et du côté opposé de cet isolant sur le raccord (2, 7) est situé un anneau de retenue souple (52).

7. Joint de tuyaux selon l'une quelconque des revendications de 1 do 5, **caractérisé en ce que** la surface de butée de la tête (21, 71) du raccord adhère à la surface du fond (14, 64, 94) de la mortaise dans l'isolant thermique (1, 6, 9), et du côté opposé de cet isolant na raccord est situé un écrou (54), avantageusement bas.

8. Joint de tuyaux selon l'une quelconque des revendications de 1 à 7, **caractérisé en ce que** l'isolant thermique (1, 9) possède des orifices d'aération (19, 99).

9. Joint de tuyaux selon l'une quelconque des revendications de 1 do 8, **caractérisé en ce que** dans l'isolant thermique (1, 6, 9), dans l'orifice du raccord (2, 7), a un joint d'étanchéité (53), qui coopère avec le tronçon non-fileté (23) du raccord.

10. Joint de tuyaux selon la revendication 9, **caractérisé en ce que**, le joint d'étanchéité (53) est placé dans la rainure sur le tronçon non-fileté (23, 63) du raccord.

11. Joint de tuyaux selon la revendication 9 ou 10, **caractérisé en ce que** l'isolant thermique (1, 9) a un collier (15, 95), perpendiculaire à l'axe de l'orifice (13, 93) pour le raccord (2), et dans ce collier, du côté de la mortaise (12, 92) pour la tête du raccord, possède une rainure (18, 98) située près du bord du collier.
